# EUROPEAN PATENT APPLICATION

(11) **EP 1 283 374 A1**
(43) Date of publication of application: **12.02.2003**
(21) Application number: 00985930.7
(22) Date of filing: 27.12.2000
(51) Int. Cl.: F16F 1/06

(54) **QUARTZ COIL SPRING AND METHOD OF PRODUCING THE SAME**

(30) Priority: 07.02.2000 JP 2000029003
(71) Applicant: Super Silicon Crystal Research Institute Corp., Annaka-shi, Gunma-ken 379-0125 (JP)
(72) Inventor: IMAI, Masato, Annaka-shi, Gunma 379-0116 (JP); ONODERA, Shinji, Sendai-shi, Miyagi 981-0935 (JP); YAMADA, Hiroshi, Sendai-shi, Miyagi 989-3205; (JP)
(74) Representative: Patentanwälte Lippert, Stachow, Schmidt & Partner
(86) International application number: JP0009298
(87) International publication number: WO01059323

(57) **Abstract**

A quartz coil spring which has a spiral coil formed of a quartz band. A mandrel bar having a length greater than the predetermined overall length of the coil spring is coaxially disposed in a preliminarily prepared quartz tube. Thermoplastic wax is charged into a space between the mandrel bar and the inner wall of the quartz tube and solidified, the space being filled with the wax filler. The quartz tube is rotated together with the wax filler around the axis by rotatively driving the mandrel bar. The quartz tube being rotated is spirally cut with a predetermined width from the outer peripheral surface by a rotatry cutter disc, thereby forming a spiral coil body. The wax filler is melted for removal by thermal treatment, whereby the spiral coil is released from the mandrel bar. The released spiral coil is immersed in a bath containing fluorinated acid and etched until a predetermined band thickness is obtained.

## Description

### TECHNICAL FIELD

The present invention relates to a quartz coil spring usable as a mechanical resilient element for holding, for example, a semiconductor wafer in an epitaxial growth furnace, and more particularly, to a quartz coil spring adapted for use in a high temperature environment and also to a method of producing the same.

### BACKGROUND ART

In the ordinary manufacturing process of a semiconductor wafer, a wafer substrate that is cut out in a given thickness from a silicon single crystal ingot is passed throuth various pretreating stages including lapping, etching, mirror polishing and the like, and then cleaned in a final cleaning stage thereby obtaining a wafer substrate having a surface with a high degree of cleanliness. The thus pretreated wafer substrate is subsequently fed into an epitaxial growth process according, for example, to a H-Si-Cl-based CVD method, in which a silicon single crystal is deposited and grown on the substrate surface.

In such an epitaxial growth process, the growth furnace used is provided with such an arrangement that the semiconductor wafer is held on a susceptor inside a shielding chamber, and while heating with a radiation heat system using, for example, a halogen lamp, an infrared ray lamp or the like, material gases are fed into the chamber. The semiconductor wafer disposed within the chamber of the growth furnace is initially heated in an atmosphere of a reference gas such as hydrogen or the like. When the wafer surface reaches a predetermined temperature, material gases are discharged into the reference gas whereupon a reactant gas having a mixed composition of these gases is fed to the wafer surface. The contact of the reactant gas with the heated wafer surface permits an epitaxial growth layer or film to be formed on the wafer surface.

The semiconductor wafer in the epitaxial growth furnace has to be fixed in position within the furnace throughout the reaction process in such a way that the surface to be fed with the reactant gas thereon is not covered with anything. Usually, the semiconductor wafer is mounted on a susceptor via wafer holder which includes a spring member for the fixation of the wafer on the susceptor. For example, a holder for holding the wafer in a fixed position by centripetal urging with a spring from the periphery of the wafer is in general use.

In this case, it has been accepted that the use of a quartz spring member is most favorable from the standpoint of its exposure to high temperatures in the furnace and the prevention of contamination of the wafer. A laminated sheet spring or a coil spring is known as a typical quartz spring.

Of these quartz springs, the laminated sheet spring is constituted by an assemby comprising a lamination of a plurality of quartz sheets mutually at given angles. For the fabrication of the spring assembly, a plurality of thin brittle spring sheets are bonded one by one at both ends thereof and its fabrication requires a long-time, careful operation. Moreover, the resulting spring assembly has the problem on the strength at the bonded portions between the quartz sheets.

On the other hand, a quartz coil spring which is constituted by a single quartz member is advantageous over the above-mentioned laminated sheet spring in view of its ease in fabrication. The quartz coil spring is usually fabricated by winding a fine quartz rod in the form of a coil at a high temperature and cooling the coil. It will be noted that a conventional quartz coil spring is so limited that the quartz rod used as a starting material should consist of a very fine one, for which only a coil spring having a small spring constant has been made. More particularly, even when a coil is formed by winding a thick quartz rod, a difficulty is involved in obtaining quartz coil springs having uniform mechanical characteristics and a high dimensional accuracy, and thus, those springs obtained have been unsuitable for industrial service in the art.

### DISCLOSURE OF THE INVENTION

In view of the above-mentioned problems, an object of the present invention is to provide a quartz coil spring having a desired spring constant and a high dimensional accuracy. Another object of the present invention is to provide a method for producing a plurality of quartz coil springs having uniform mechanical characteristics by a simple procedure.

The above objects can be achieved, according to the present invention, by a quartz coil spring including a quartz spiral coil, wherein said spiral coil is formed of a quartz band.

According to a preferred embodiment of the present invention, the quartz band has a rectangular contour in cross section perpendicular to a longitudinal direction thereof, the rectangular contour being formed with a pair of long sides and a pair of short sides which are shorter than said long sides.

According to another preferred embodiment of the present invention, the spiral coil has a peripheral surface formed by one of said long sides.

The present invention also provides a method for producing a quartz coil spring including a quartx spiral coil which is formed of a quartz band, comprising the steps of:
providing a straight quartz tube having a central axis;
disposing a mandrel bar coaxially on said central axis in said straight quartz tube along a length over a predetermined overall length of a coil spring to be produced;
charging a thermally melted wax into a space between the mandrel bar and an inner wall of the quartz tube and solidified the wax thereby filling the space with the resulting solid wax filler;
rotating the quartz tube together with the wax filler about the axis by rotatively driving the mandrel bar;
spirally cutting the quartz tube under rotation with a predetermined cut width from the outer peripheral surface thereof by means of a rotary cutter disc to form a spiral coil of a quartz band;
melting the wax filler for removal by thermal treatment and releasing the spiral coil from the mandrel bar; and
immersing the thus released spiral coil in a hydrofluoric acid-containing bath for etching to a predetermined thickness.

Preferably, the method further comprises the step of cutting said spiral coil on the solid wax filler into a plurality of sectional coils each having a predetermined length along the axis, prior to said thermal treatment for melting and removing the wax from the space.

The quartz coil spring according to the present invention comprises a spiral coil formed of a quartz band, and thus, proper selection of design dimensions such as the width of the quartz band, the spiral pitches and the like permits a spring to be easily fabricated as having a desired spring constant.

Preferably, the quartz band has a rectangular contour in cross section perpendicular to a longitudinal direction thereof, the rectangular contour being formed with a pair of long sides and a pair of short sides which are shorter than said long sides. In this case, the proper selection of thickness of the quartz band allows a spring constant to be readily controlled. Thus, the present invention can provide a quartz spring, which is able to keep the control of the spring constant more accurately than a conventional coil spring made of quartz having a circular cross section.

In the quartz coil spring according to the present invention, the circumferential surface of the spiral coil should preferably be formed of the long sides of the cross-sectional contour of the quartz band. In this case, the cross section size of the quartz band along the axial direction that corresponds to the expansion and contraction directions of the coil becomes larger than that along the circumferential direction of the coil, so that the spring constant in the resulting coil product can be selected as large with a small size spring. Accordingly, the spring constant can be controlled in high accuracy over a wide range, and simultaneously, such a control of the spring constant in high accuracy as is difficult for a conventional coil spring made of a spiral from a thick quartz rod is enabled.

In the method for producing a quartz coil springing according to the present invention, a preliminarily prepared, straight quartz tube, preferably thin quartz tube, is cut into a spiral by means of a rotary cutter disc under the support on the solidified wax filler, thereby forming a spiral coil . Accordingly, this method is much easier in operation than a conventional method wherein a quartz rod is wound while bending under high temperature conditions, and it is thus apparent that the method according to the present invention is responsible for mass production and is excellent in practice. Moreover, the method according to the present invention ensures a coil spring having a spring constant coincident, in high accuracy, with a desired design value by proper selection of the thickness of the quartz tube prepared as a starting material.

To cut the quartz tube into a spiral, a cutting technique using a rotary cutter disc or blade, which is widely employed for screw cutting, may be used. For instance, a diamond cutter blade wheel can be utilized as a rotary cutter disc. If cutting is continued while rotating the quartz tube about the central axis thereof, a spiral coil can be readily cut out. At this stage, when the width and pitches of cutting are, respectively, preset, the spring constant can be controlled as desired.

In the method according to the present invention, a mandrel bar is beforehand disposed coaxially in the quartz tube at the preliminary steps prior to the cutting step, and a thermally melted wax filler is charged into the space between the mandrel bar and the inner wall of the quartz tube and is solidified so that the space is filled with the resulting solid wax filler. In this way, the quartz tube can be supported with the mandrel bar via the solid wax filler during the course of the cutting step, under which when the mandrel bar is rotatively driven, it can be rotated about the axis. Additionally, since the quartz tube is tightly supported with the solid wax filler, the quartz tube can be cut along with the surface layer portion of the wax filler filled in the tube upon cutting of the quartz tube with a rotary cutter disc. Thus, the cutting can very smoothly proceed without causing defects at the cut portion of the quartz tube. At the time of completion of the cutting step, a spirally cut quartz tube is formed as a spiral coil around the outer peripheral surface of the solid wax filler supported with the mandrel bar. In this condition, when wholly heated, the spiral coil can be readily released from the mandrel bar due to the melting and flowing-out of the wax.

The spiral coil, thus released and removed from the mandrel bar, is then immersed in an etching bath containing hydrofluoric acid and undergoes etching until the wall thickness of the spiral coil is reduced to a predetermined target value. In this case, the control of the thickness can be performed in high accuracy by proper selection of various etching conditions such as an immersion time, the composition and concentration of the bath, the degree of agitation and the like, thus greatly contributing to the highly accurate control of spring constant. Moreover, fine flaws and burrs formed upon the cutting may be remedied through the etching, and thus, the etching is advantageous in improving the breaking strength of the coil spring.

Usually, an inner chamber of an epitaxial growth furnace is maintained under high temperature environmental condition of 1000 °C or over. The quartz coil spring according to the present invention not only is limited to the use within an epitaxial growth furnace, but also is widely usable in a similar high temperature environment. Especially, where a high degree of cleanliness is required for its environment of application, the quartz coil spring according to the present invention does not serve as a contamination source and is thus beneficial.

Thus, according to the present invention, a quartz coil spring having a desired spring constant is obtained, and such a quartz coil spring having a desired spring constant can be readily produced according to a mass-producible procedure adapted for practical use and its spring constant can be controlled in high accuracy. Other features and advantages of the invention will become apparent from the following description relating to preferred embodiments of the present invention in conjunction with the accompanying drawings, which should not be construed as limiting the invention thereto and are shown only for illustration.

### BRIEF DESCRIPTION OF THE DRAWINGS

Figs. 1a to 1g are, respectively, a schematic illustrative view showing, in sequence, the steps of producing a quartz coil spring according to an embodiment of the present invention.

Fig. 2 is a graph showing the variation in spring constant Ks in relation to the width W of individual coil bands for three types of quartz coil springs (with coil pitches = 3 mm, 4mm and 5 mm) obtained according to the present invention, wherein the abscissa indicates width W (mm) of the quartz band and the ordinate indicates spring constant Ks (kgf/mm).

Fig. 3 is a graph showing the variation in etching amount in relation to the immersion time in a hydrofluoric acid-containing bath of a quartz band, wherein the abscissa indicates immersion time T (minutes) and the ordinate indicates a loss of thickness, i.e. etching amount Et (mm).

Fig. 4 is a graph showing the variation in the spring constant of a quaetz coil spring in relation to the thickness of a quartz band, wherein the abscissa indicates the band thickness t (mm) and the ordinate indicates spring constant Ks (kgf/mm).

Figs. 5a and 5b show, respectively, an embodiment of a spring mechanism made of five quartz coil springs according to the present invention, wherein Fig. 5a is a front view and Fig. 5b is a sectional view.

### BEST MODE FOR CARRYING OUT THE INVENTION

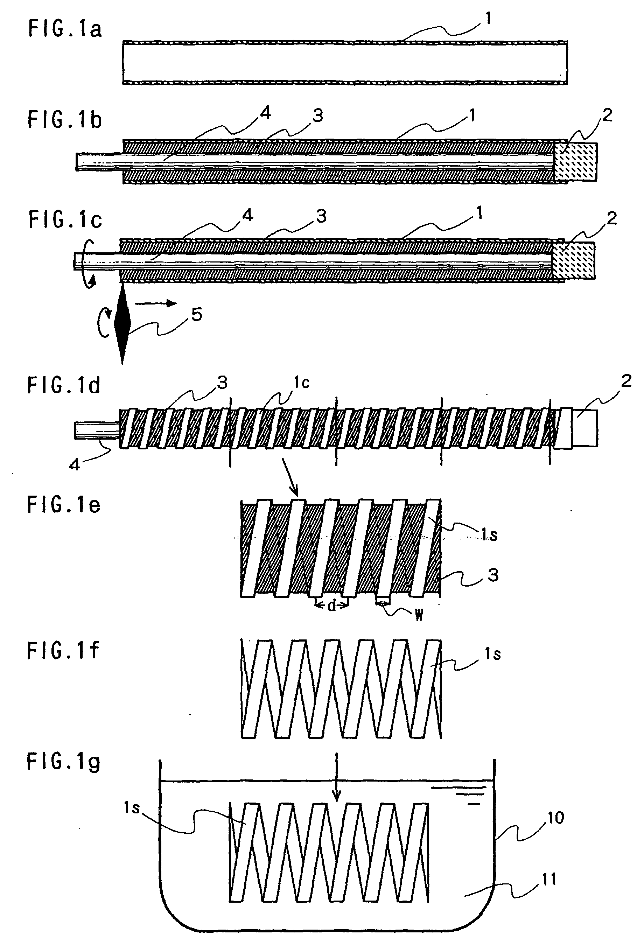

Figs. 1a to 1g show, in sequence, the producing steps of a quartz coil spring according to an embodiment of the present invention. In this embodiment, a lathe, which is a general-purpose machining lathe modified for glass cutting, is used to cut out a quartz coil spring from a preliminarily prepared straight quartz glass tube.

Initially, a straight quartz tube 1 having an outer diameter of 10 mm, an inner diameter of 8 mm and a length of 180 mm was prepared (Fig. 1a). This quartz tube is made of highly pure quartz and is a defect-free one, which is available on tha market.

For a preliminary step, the quartz tube 1 was heated in an environment of 40 °C, and was plugged with a cork stopper 2 at one end thereof, followed by pouring and charging a thermally melted wax 3 into the tube. During the time when the wax 3 was kept melted, a mandrel bar 4, which is made of a heat-resistant glass "Pyrex" (trade mark) and has a diameter of 6 mm and a length of 200 mm, was inserted into the wax 3 until it reached substantially at the cork stopper 2 at one end thereof, followed by cooling the whole to solidify the wax 3, thereby fixing the mandrel bar 4 within the quartz tube by the resulting solid wax filler 3. In the case, the insertion position of the glass mandrel bar 4 was so controlled to be coaxial with the central axis of the quartz tube 1 (Fig. 1b).

Then, the other end of the mandrel bar 4 that was projected from the wax filler 3 at the open end side of the quartz tube 1 was connected to the spindle nose of the lathe so that the quartz tube 1 was rotatably held about the axis. The quartz tube 1 was rotated about the axis at a given speed by rotating the spindle of the lathe. On the other hand, a diamond cutter blade wheel (V face) 5 attached to the lathe was rotated and was brought into contact with the outer peripheral surface of the quartz tube being rotated beforehand at a given angle of lead to commence spiral cut. As the cut proceeded, the wheel 5 was axially moved at a given speed relative to the quartz tube by means of a wheel feed mechanism of the lathe, so that the quartz tube 1 was spirally cut out at predetermined coil pitches d (Fig. 1c).

The cut working is possibly carried out by a similar manner as spiral cutting to the outer peripheral surface of a hard metal bar. It should be noted that the depth of cut was set at 0.2 mm or below for one working cycle and several cycles were repeated. This is for the reason that the stress exerted on the quartz tube during the course of the cut working is suppressed to a low level so as to prevent the breakage of the quartz tube. In this embodiment, the quartz tube 1 had an initial wall thickness of 1 mm, and in order to spirally cut out the overall wall thickness of the quartz tube, at least five cycles of the cut working were repeated so as to trace out along the same cut groove. In final cut working, the blade tip of the wheel 5 was passed through the wall thickness of the quartz tube 1 and cut into part of the surface layer of the solid wax filler 3.

According to this cut working, a spiral coil 1c formed of a quartz band was cut away from the quartz tube 1. In this embodiment, the spiral coil 1c obtained had coil pitches of d = 3 mm, a band width of W = 2 mm and an overall length over 160 mm (Fig. 1d).

The spiral coil 1c on the outer peripheral surface of the wax filler 3 was cut into a plurality of sections, each having a length of 40 mm, along with the mandrel bar 4 and the wax filler 3 in such a way that opposite ends of the each section were in parallel to each other, therby obtaining coil springs 1s each of which corresponds to individual sections (Fig. 1e). In this way, four coil springs 1s in total, each having a coil length of 40 mm, were obtained. Each of the coil springs 1s of every section was wholly heated to remove the wax by melting, and the mandrel bar 4 was also released to take out the coil spring 1s (Fig. 1f).

The resulting coil spring 1s was immersed in a container 10 filled with an etching bath made of a 50 % hydrofluoric acid solution, ordinarily employed for cleaning in a semiconductor manufacturing process, and etched to a desired band thickness. More particularly, the spring was etched to a band thickness of from 1 mm to 0.9 mm by immersion at a liquid temperature of 25 °C for 30 minutes and then washed. The resultant quartz coil spring 1s had a spring constant Ks of 0.1 kgf/mm.

In the process stated hereinabove, the quartz tube 1 was internally, tightly supported with the solid wax filler 3 and the mandrel bar 4 throughout the spiral cutting step and the sectional cutting step, so that the quartz tube underwent no breakage and the spiral cut operation and the sectional cut operation using the automatic lathe could be carried out very smoothly.

In the method according to the present invention, it is possible to manufacture quartz coil springs having different spring constants by an appropleate selection of the coil pitches and/or band width W in the spiral cut working. In addition, proper selection of conditions including the immersion time in the etching step ensures fine control of a degree of etching of quartz, i.e. the thickness of the quartz band constituting the coil spring, thus leading to the control of spring constant in high accuracy.

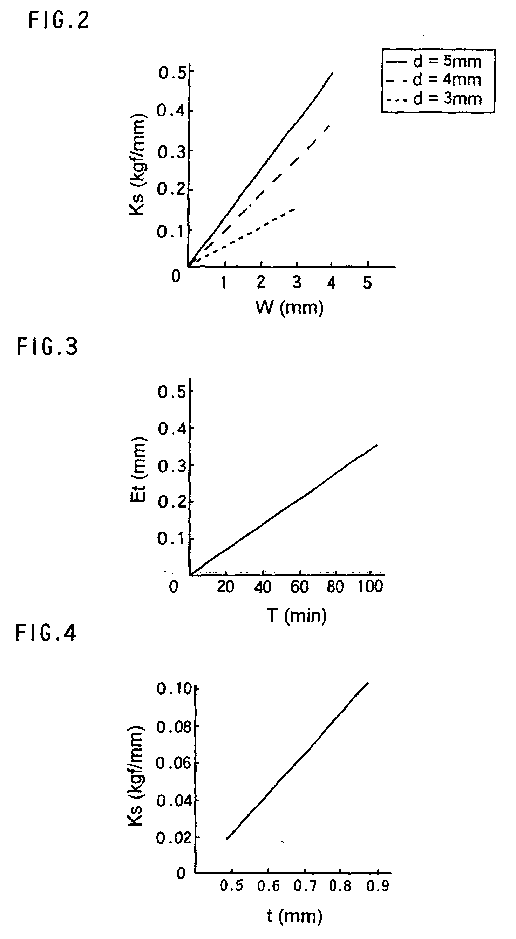

With respect to the quartz coil spring according to the present invention, Fig. 2 shows the results of determining the relation between the band width W and the spring constant Ks using the coil pitches d as a parameter. It will be noted that three types of coil springs having different coil pitches d of 3 mm, 4 mm and 5 mm were tested wherein all the types had a coil length of 40 mm and a band thickness of 0.9 mm. As will be apparent from Fig. 2, a clear proportional relation is observed between the band width W and the spring constant Ks for the springs having different coil pitches, and a larger band width W results in a larger spring constant Ks.

Fig, 3 shows the results of determining the relation between the immersion time T in a hydrofluoric acid solution bath in the etching step and the etching amount Et of the quartz bans, i.e. the reduction in the band thickness. As will be apparent from Fig. 3, the variation of the etching amount is in proportional relation with the immersion time in the hydrofluoric acid solution bath (50 %, 25 °C), from which it will be seen that a desired etching amount can be realized by proper control of the immersion time.

Fig. 4 shows the variation of the spring constant of a quartz coil spring in relation to the thickness of the quartz band. The tested quartz coil spring has a coil length of 40 mm and a coil pitch of d = 3 mm. As will be apparent from Fig. 4, a larger thickness of quartz band proportionally leads to a larger spring constant. As will be seen from Figs. 3 and 4, if the etching amount is so controlled that a target value of the band thickness corresponding to a desired spring constant for a design properties is preliminarily determined and the immersion time in a hydrofluoric acid solution bath is properly set so as to obtain the band thickness coincident with the target value, a quartz coil spring having an intended spring constant can be readily obtained.

Although the quartz coil spring obtained according to the present invention is suited particularly for the use in an epitaxial growth furnace in which the quartz coil spring is exposed under a high temperature environment of 1000 C or over, limitation is not placed on such use and the coil spring may be widely used in a similar high temperature environment. Where a high degree of cleanliness is required, especially, in an environment of use, the quartz coil spring according to the present invention does not act as a contamination source.

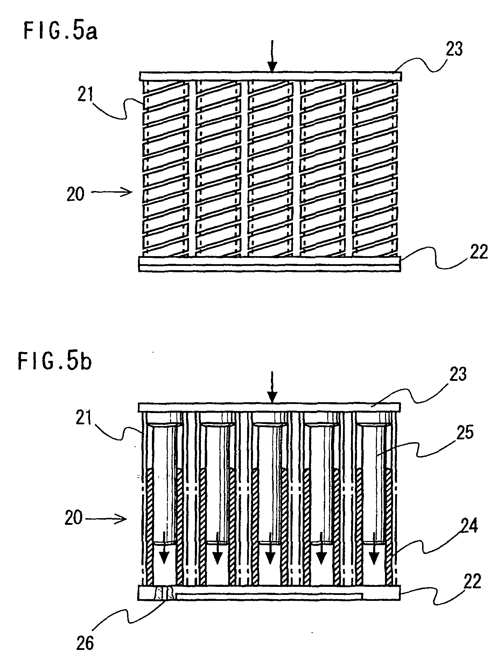

Not only the quartz spring coil according to the present invention is merely used singly, but also a plurality of spring coils may be combined together in accordance with the spring load required for an intended object to be supported thereby forming a spring structure with arbitrary, desired strength. An example of such a spring structure is shown in Figs. 5a and 5b. In this example, all the parts of the spring structure 20 are made of quartz. The spring structure 20 comprises a plurality of (five in this example) quartz coil springs 21 having the same size and same characteristics, and a pair of quartz holding members 22 and 23 for holding these springs. The holding member 22 has five quartz cylinders 24 fixed thereto, and the other holding member 23 also has five quartz pistons 25 fixed thereto. The outer diameter of the respective cylinders 24 is slightly smaller than the inner diameter of the quartz coil spring 21, and the outer diameter of the respective pistons 25 is slightly smaller than the inner diameter of the cylinder 24. Both holding members 22 and 23 are so assembled that individual pistons 25 are slidable within corresponding cylinders 24. The five quartz coil springs 21 are arranged in the facing space between the two holding members 22, 23 so as to surround the outer peripheries of the respective piston-cylinder assemblies (24, 25). These coil springs, respectively, support the load, indicated by the arrows in the figures, between the two holding members and are thus compressed, whereupon the approaching movement of both holding members 22, 23 are guided by means of the respective piston-cylinder assemblies (24, 25). In the absence of the load, the respective coil springs 21 are returned to an initial coil length, and the movements of both holding members kept away from each other are likewise guided by means of the respective piston-cylinder assemblies (24, 25). In addition, the respective piston-cylinder assemblies serve to support the springs inside the windings of the quartz coil springs.

It will be noted that in the above-stated embodiment relating to the producing method of a quartz coil spring according to the present invention, after the quartz tube is filled up with thermally melted wax in the preliminary step, the mandrel bar was inserted into the wax prior to solidification. The producing method according to the present invention is not limited to this procedure, and it is also possible for the mandrel bar to be initially inserted into the quartz tube, then, under which while keeping the quartz tube and the mandrel bar in a coaxial relation, a wax melt may be poured into the space between the inner wall of the quartz tube and the outer periphery of the mandrel bar, followed by cooling to solidify the wax. In short, the mandrel bar should be finally arranged within the quartz tube in a coaxial relation therewith and the space between the inner wall of the mandrel bar and the quartz tube should be filled with the solidified wax.

## Claims

1. A quartz coil spring including a quartz spiral coil, **characterized in that** said spiral coil is formed of a quartz band.

2. The quartz coil spring according to claim 1, **characterized in that** said quartz band has a rectangular contour in cross section perpendicular to a longitudinal direction thereof, said contour being formed with a pair of long sides and a pair of short sides which are shorter than said long sides.

3. The quartz coil spring according to claim 2, **characterized in that** said spiral coil has a peripheral surface formed by one of said long sides.

4. A method for producing a quartz coil spring including a spiral coil which is formed of a quartz band, **characterized in that** said method comprises the steps of:
providing a straight quartz tube having a central axis;
disposing a mandrel bar coaxially on said central axis in said straight quartz tube along a length over a predetermined overall length of a coil spring to be produced;
charging a thermally melted wax into a space between the mandrel bar and an inner wall of the quartz tube and solidified the wax thereby filling the space with the resulting solid wax filler;
rotating the quartz tube together with the wax filler about the axis by rotatively driving the mandrel bar;
spirally cutting the quartz tube under rotation with a predetermined cut width from the outer peripheral surface thereof by means of a rotating cut off grinding disc to form a spiral coil of a quartz band;
melting the wax filler for removal by thermal treatment and releasing the spiral coil from the mandrel bar; and
immersing the thus released spiral coil in a hydrofluoric acid-containing bath for etching to a predetermined thickness.

5. The method according to claim 4, further comprising the step of cutting said spiral coil on the solid wax filler into a plurality of sectional coils each having a predetermined length along the axis, prior to said thermal treatment for melting and removing the wax filler from the space.
